# EUROPEAN PATENT APPLICATION

(11) **EP 2 261 770 A2**
(43) Date of publication of application: **15.12.2010**
(21) Application number: 10158863.0
(22) Date of filing: 31.03.2010
(51) Int. Cl.: G06F 1/26, H02J 1/10

(54) **Power supply apparatus, power receiving apparatus, power supply system, and power supply method**

(30) Priority: 11.05.2009 JP 2009114923
(71) Applicant: Sony Corporation, Minato-ku Tokyo 108-0075 (JP)
(72) Inventor: Tajima, Shigeru, Minato-ku Tokyo 108-0075 (JP)
(74) Representative: Turner, James Arthur

(57) **Abstract**

A power supply apparatus is provided which includes a direct-current power source connected to a bus line on which an information signal representing information is superposed upon direct-current power including first direct-current power and second direct-current power, the direct-current power source arranged to always output to the bus line the second direct-current power of a positive voltage, the second direct-current power being superposed, on the bus line, upon the first direct-current power output for a predetermined first period. The voltage of the second direct-current power is lower than the minimum voltage of the first direct-current power.

## Description

The present invention relates to a power supply apparatus, a power receiving apparatus, a power supply system, and a power supply method.

Many electronic devices, such as personal computers and game machines, use altering-circuit (AC) adapters for their operating and for charging their batteries. AC power is input to an AC adapter from a commercial power source, and then power adapted to a device is output from the AC adapter. Ordinary electric devices operate by a direct-current (DC), where the voltage and/or the current of each device may be different from each other. Accordingly, the standards of AC adapters for outputting power adapted to each device would be different for each device, which results in the disadvantageously increased number of AC adapters for the increased number of devices. Even similarly-shaped AC adapters may not be compatible with each other.

For such disadvantage, there is proposed a power source bus system, in which a power supply block for supplying power to a device, such as a battery or an AC adapter, and a power consuming block for being supplied with the power from the power supply block are connected to one common direct-current bus line (See JP 2001-306191 (A) and JP 2008-123051 (A)). In such power source bus system, a direct current flows through the bus line. Each block is described as an object, and the object for each block transmit/receive information (state data) to/from each other through the bus line. Furthermore, the object for each block generates the information (state data), based upon a request from an object for another block, and transmits it as a response data. Then, the object for the block received the response data can control power supply and consumption, based upon the contents of the received response data.

In such a power source bus system for supplying direct-current power, communication modems for information communication and control microprocessors for control over machinery are activated in both of a server for supply power and a client for receiving power. However, in this power source bus system, power should be supplied intermittently even if power is received regularly from the server. Thus advantageously, a regular power source for activating these modems and processors should be necessarily secured by some approach. Advantageously, no power source exists for an apparatus for use in connection to the power source bus system until the apparatus is connected to the bus line to be supplied with power by a server, unless it includes any auxiliary power source for its activation, such as a battery.

In light of the foregoing, it is desirable to provide in the power source bus system for supplying direct-current power, a power supply apparatus, a power supply method, a power supply system, and a power supply method, which are novel and improved, and which allow advantages such as a simplified power supply system, improvement and enhancement in maintenance, reduced cost, etc.

According to an embodiment of the present invention, there is provided a power supply apparatus including a direct-current power source connected to a bus line on which an information signal representing information is superposed upon direct-current power including first direct-current power and second direct-current power, the direct-current power source arranged to always outputting to the bus line the second direct-current power of a positive voltage, the second direct-current power being superposed, on the bus line, upon the first direct-current power output for a predetermined first period. The voltage of the second direct-current power is lower than the minimum voltage of the first direct-current power.

According to another embodiment of the present invention, there is provided a power receiving apparatus including a power receiver connected to a bus line on which an information signal representing information is superposed upon direct-current power including first direct-current power and second direct-current power, the power receiver arranged to receive from the bus line the second direct-current power of a positive voltage lower than a minimum voltage of the first direct-current power, the second direct-current power being superposed, on the bus line, upon the first direct-current power output for a predetermined first period.

According to yet another embodiment of the present invention, there is provided a power supply system including a power supply apparatus and a power receiving apparatus connected to a bus line on which an information signal representing information is superposed upon direct-current power including first direct-current power and second direct-current power. The power supply apparatus includes a direct-current power source arranged to always outputting to the bus line the second direct-current power of a positive voltage, the second direct-current power being superposed, on the bus line, upon the first direct-current power output for a predetermined first period. The voltage of the second direct-current power is lower than the minimum voltage of the first direct-current power. The power receiving apparatus includes a power receiver arranged to receive from the bus line the second direct-current power.

According to yet another embodiment of the present invention, there is provided a power supply method including the step of being connected to a bus line on which an information signal representing information is superposed upon direct-current power including first direct-current power and second direct-current power, and always outputting to the bus line the second direct-current power of a positive voltage, the second direct current power being superposed, on the bus line, upon the first direct-current power output for a predetermined first period. The voltage of the second direct-current power is lower than the minimum voltage of the first direct-current power.

According to yet another embodiment of the present invention, there is provided a power supply apparatus including a direct-current power source connected to a bus line on which an information signal representing information is superposed upon direct-current power including first direct-current power and second direct-current power, the second direct current power being superposed, on the bus line, upon the first direct-current power output for a predetermined first period, the direct-current power source arranged to outputting to the bus line the second direct-current power of a negative voltage for a second period different from the first period.

According to yet another embodiment of the present invention, there is provided a power receiving apparatus including a power receiver connected to a bus line on which an information signal representing information is superposed upon direct-current power including first direct-current power and second direct-current power, the second direct-current power being superposed, on the bus line, upon the first direct-current power output for a predetermined first period, the power receiver arranged to receive from the bus line the second direct-current power of a negative voltage for a second period different from the first period.

The power receiving apparatus may further include a timing detector for detecting the second period by occurrence of the negative voltage of the second direct-current power. The second period detected by the timing detector may be used for synchronisation processing between the power receiving apparatus and another device connected to the bus line.

According to yet another embodiment of the present invention, there is provided a power supply system including a power supply apparatus and a power receiving apparatus connected to a bus line on which an information signal representing information is superposed upon direct-current power including first direct-current power and second direct-current power. The second direct-current power being superposed, on the bus line, upon the first direct-current power output for a predetermined first period. The power supply apparatus includes a direct-current power source arranged to outputting to the bus line the second direct-current power of a negative voltage for a second period different from the first period. The power receiving apparatus includes a power receiver arranged to receive from the bus line the second direct-current power for the second period.

According to yet another embodiment of the present invention, there is provided a power supply method including the step of being connected to a bus line on which an information signal representing information is superposed upon direct-current power including first direct-current power and second direct-current power being superposed, on the bus line, upon the first direct-current power output for a predetermined first period, and outputting to the bus line the second direct-current power of a negative voltage for a second period different from the first period.

Various respective aspects and features of the invention are defined in the appended claims. Combinations of features from the dependent claims may be combined with features of the independent claims as appropriate and not merely as explicitly set out in the claims.

According to the embodiments of the present invention described above, in the power source bus system for supplying direct-current power, auxiliary power for trigger the primary activation can be spared, and with auxiliary power spared, it is possible to provide the novel and improved power supply apparatus, power supply method, power supply system, and power supply method which allow advantages such as a simplified power supply system, improvement and enhancement in maintenance, reduced cost, etc.

Embodiments of the invention will now be described with reference to the accompanying drawings, throughout which like parts are referred to by like references, and in which:
Fig. 1 is an illustration that shows the arrangement of the power supply system according to the first embodiment of the present invention;
Fig. 2 is an illustration that shows the voltage output supplied from the power source server in the power supply system according to the first embodiment of the present invention;
Fig. 3 is an illustration that shows an exemplary arrangement for superposing the voltage Vs upon the bus line in the power supply system according to the first embodiment of the present invention;
Fig. 4 is an illustration that shows an example where the voltage from the power source server and the voltage from the direct-current power source are superposed upon the bus line;
Fig. 5 is an illustration that shows the arrangement of the client according to the first embodiment of the present invention;
Fig. 6 is an illustration that shows the arrangement of the client according to the second embodiment of the present invention;
Fig. 7 is an illustration that shows an example where the voltage from the power source server and the voltage from the direct-current power source are superposed upon the bus line in the third embodiment of the present invention;
Fig. 8 is an illustration that shows the arrangement of the client according to the third embodiment of the present invention;
Fig. 9 is an illustration that shows the arrangement of the client according to the third embodiment of the present invention; and
Fig. 10 is an illustration that illustrates the power supply process with the power supply system according to each of the embodiments of the present invention.

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted.

Following the order below, the preferred embodiments of the present invention will be described in detail.

### < 1. FIRST EMBODIMENT >

### < 1-1. Arrangement of Power Supply System >

### < 1-2. Example of Voltage Output >

### < 1-3. Arrangement for Superposing Voltage upon Bus Line >

### < 1-4. Arrangement of Client >

### < 2. SECOND EMBODIMENT >

### < 3. THIRD EMBODIMENT >

### < 4. FOURTH EMBODIMENT >

### < 5. POWER SUPPLY PROCESS BY POWER SUPPLY SYSTEM>

### < 6. CONCLUSION >

### < 1. FIRST EMBODIMENT >

### < 1-1. Arrangement of Power Supply System >

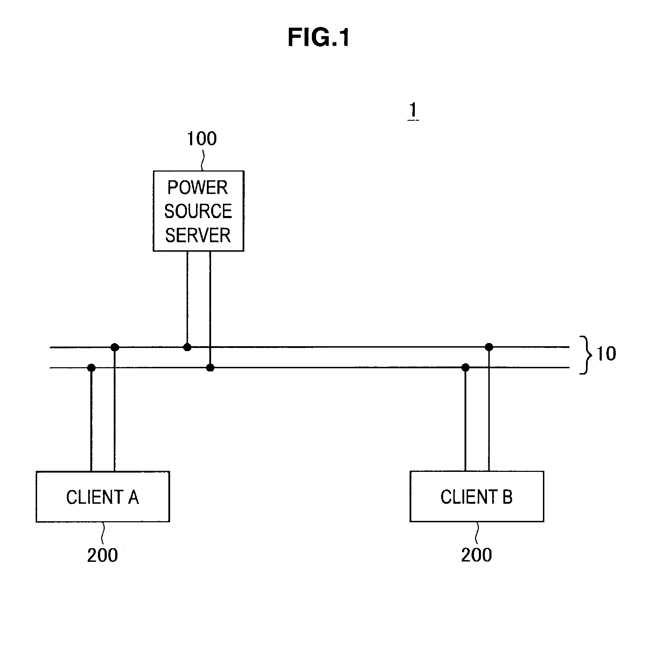

First of all, the arrangement of a power supply system according to the first embodiment of the present invention will be described. Fig. 1 is an illustration that shows the arrangement of the power supply system 1 according to the first embodiment of the present invention. Now, the arrangement of the power supply system 1 according to the first embodiment of the present invention will be described below with reference to Fig. 1.

As shown in Fig. 1, the power supply system 1 according to the embodiment of the present invention includes a power source server 1 and clients 200. The power source server 100 and the clients 200 are connected to each other via a bus line 10.

The power source server 100 supplies a direct current to the clients 200. Moreover, the power source server 100 transmits/receives information signals to/from the clients 200. In this embodiment, the bus line 10 is utilised for both supplying a direct current and transmitting/receiving information signals between the power source server 100 and the clients 200.

The power source server 100 includes a communication-use modem for transmitting/receiving information signals, a microprocessor for controlling power supply, a switch for controlling the output of the direct current, etc.

The clients 200 are supplied with the direct current by the power source server 100. Moreover, the clients 200 transmit/receive information signals to/from the power source server 100. Fig. 1 shows two clients 200, which are designated as 200, respectively, given as a matter of illustration.

Th clients 200 include communication-use modems for transmitting/receiving information signals, microprocessors for controlling power supply, switches for controlling the output of the direct current, etc.

Besides, although Fig. 1 shows an example where the power supply system 1 includes one power source server 100 and two clients 200, it should be, of course, appreciated that the number of power source servers and the number of clients in the embodiments of the present invention are not limited to this example.

The arrangement of the power supply system 1 according to the first embodiment of the present invention has been described above. Next, an example of the voltage output supplied from the power source server in the power supply system 1 according to the first embodiment of the present invention will be described.

### < 1-2. Example of Voltage Output >

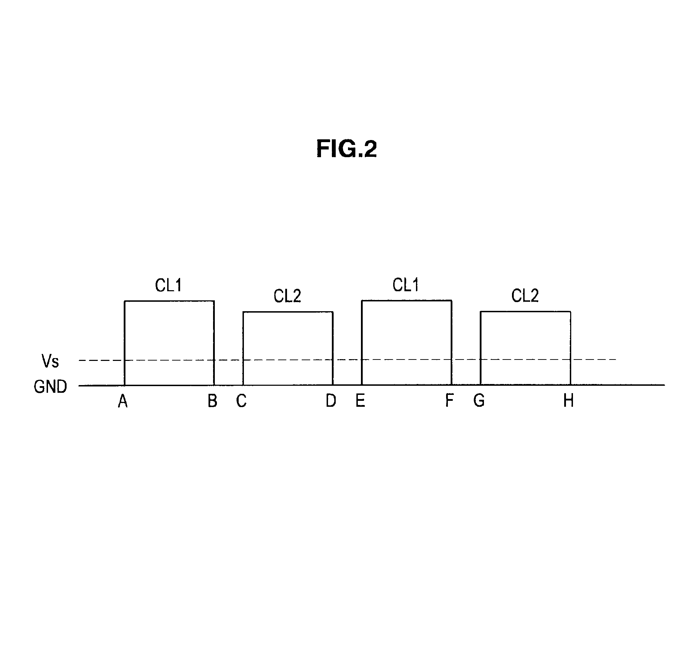

Fig. 2 is an illustration that shows the voltage output supplied from the power source server in the power supply system 1 according to the first embodiment of the present invention. Now, the voltage output from the power source server in the power supply system 1 according to the first embodiment of the present invention will be described below with reference to Fig. 2.

Fig. 2 shows how a direct current is supplied from the power source server 100 to the two clients 200, for example. The power from the power source server 100 is supplied to the clients in time slots (power slots), each of which is separately given for a suitable unit time, such as the period AB, CD, EF, or GH in Fig. 2. For the parts indicated as CL1, i.e. for the periods AB and EF, power is sent, addressed to the client CL1. And for the parts indicated as CL2, i.e. for the periods CD and GH, power is sent, addressed to client CL2. The periods between the power slots are defined as guard periods for absorbing gaps between timing of switching control between the power source server 100 and the clients 200. For example, the period of a power slot may be 1.5 seconds, and the guard period may be 300 milliseconds.

The technique for synchronising the power source server 100 and the clients 200 and the technique for supplying power from the power source 100 to the clients 200 are disclosed in JP 2008-123051 (A), and accordingly the details thereof will not be described here.

Thus, the clients 200 may not be always supplied with power from the power source server 100 immediately after the clients 200 connect to the bus line 10 because the power is supplied from the power source server 100 intermittently. The existence of the clients 200 should be necessarily notified to the power source server 100, so that the clients 200 are supplied with power from the power source server 100 (see JP 2008-123051 (A)). In order to notify the existence of the clients 200 to the power source server 100, the communication modems and the microprocessors included within the clients 200 will be necessarily activated. Then, for the activation of the communication modems and the microprocessors, power for the activation will be necessarily secured separately from the power supplied from the power source server 100.

Then, in this embodiment, for use in the activation of the clients 200, a voltage Vs, which is lower than the direct-current voltage output from the power source server 100, is output to the bus line 10 to be superposed upon the direct-current voltage output from the power source server 100. Superposition of the voltage Vs, which is lower than the direct-current voltage output from the power source server 100, upon the direct-current voltage output from the power source server 100 enables to spare auxiliary power for activating the communication modems and the microprocessors included within the clients 200 or to use a small amount of auxiliary power.

An example of the voltage output from the power source server in the power supply system 1 according to the first embodiment of the present invention has been described above. Next, an arrangement for superposing the voltage Vs upon the bus line 10 in the power supply system 1 according to the first embodiment of the present invention will be described.

### < 1-3. Arrangement for Superposing Voltage upon Bus Line >

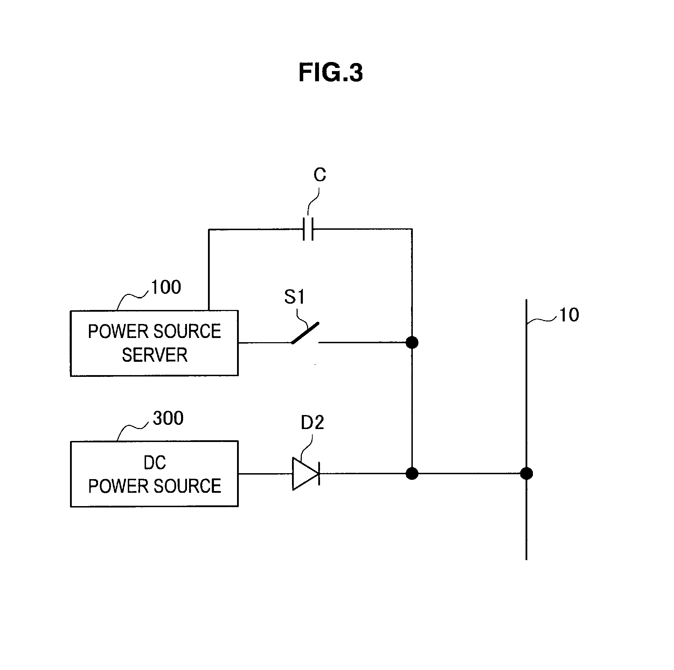

Fig. 3 is an illustration that shows an exemplary arrangement for superposing the voltage Vs upon the bus line 10 in the power supply system 1 according to the first embodiment of the present invention. Now, the arrangement for superposing the voltage Vs upon the bus line 10 in the power supply system 1 according to the first embodiment of the present invention will be described below with reference to Fig. 3.

In the arrangement shown in Fig. 3, the power supply system 1 according to the first embodiment of the present invention includes, in addition to the power source server 100, a direct-current power source 300 for outputting the voltage Vs for the purpose of superposing the voltage Vs upon the bus line 10. The direct-current power source 300 outputs the power of the voltage Vs to the bus line 10 via the diode D2.

On the other hand, by switching of the switch S 1, direct-current power supply from the power source server 100 to the clients 200 is controlled. Direct-current power is output from the power source server 100 to the bus line 10 whilst the switch S1 is remains ON, and direct-current power stops being supplied from the power source server 100 whilst the switch S1 remains OFF. Such switching of the switch S 1 may be controlled by a control microprocessor (not shown) included in the power source server 100.

The power source server 100 and the clients 200 communicate with each other in radio frequency signals superposed upon power supplied to the bus line 10. The communication in the radio frequency signals is made on a path via the capacitor C. Accordingly, regardless of ON/OFF of switch S1, the radio frequency signals are sent to the bus line 10 via the capacitor C, and the communication between the power source server 100 and the clients 200 is made in the radio frequency signals.

The output voltage Vs from the direct-current power source 300 is set to a value lower than the minimum voltage supplied by the power source server 100. If the minimum voltage supplied by the power source server 100 is equal to or lower than Vs, then power is supplied not from the power source server 100 but from the direct-current power source 300, which will be prevented by setting the output voltage Vs from the direct-current power source 300 to a value lower than the minimum voltage of the power supplied by the power source server 100. By setting Vs to a value lower than the minimum voltage of the power supplied by the power source server 100, the diode D2 is inversely biased so that Vs is masked for the periods in which power is output from the power source server 100, i.e. for the periods of the power slots shown in Fig. 2. Thus, entire power is obtained from the power source server 100 for the periods in which power is output from the power source server 100. Then, the output voltage Vs from the direct-current power source will be only observed at the bus line 10 only when the switch S1 remains opened. In the example shown in Fig. 2, it is each of the periods BC, DE, and FG for which the output voltage Vs from the direct-current power source 300 is only observed at the bus line 10.

Besides, the direct-current power source 300 may limit its current to output in order to avoid excessive current supply from the direct-current power source 300 in case where any of the clients 200 receiving power happens to fall into a short circuit accident or anything in the power supply system 1 as shown in Fig. 1, which might result in an excessive current supplied from the direct-current power source 300. On the other hand, the power supplied from the power source server 100 is limited to the maximum supply current provided upon an agreement between the clients 200 and the power source server 100 in advance.

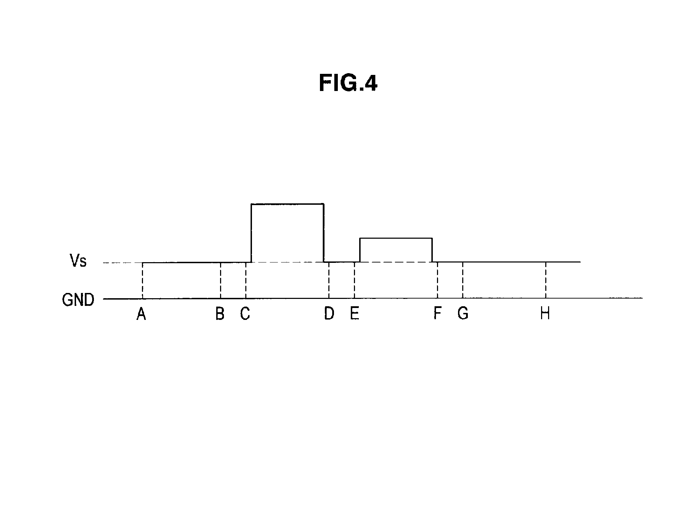

Fig. 4 is an illustration that shows an example where the voltage from the power source server 100 and the voltage from the direct-current power source 300 are superposed upon the bus line 10. In the example shown in Fig. 4, the periods AB, CD, EF, and GH are the periods for which power can be supplied from the power source server 100 whilst the periods BC, DE, and FG are the guard periods for absorbing gaps between timing of switching control between the power source server 100 and the clients 200.

In the example shown in Fig. 4, no power is supplied from the power source server 100 for the periods AB. Thus, the voltage Vs from the direct-current power source 300 is observed, as it is, at the bus line 10 for the period AB. Naturally, no power is supplied from the power source server 100 for the following period BC, and thus, the voltage Vs from the direct-current power source 300 is observed, as it is, at the bus line 10 for this period BC as well.

In the example shown in Fig. 4, power is supplied from the power source server 100 for the following period CD. For this period, the voltage Vs from the direct-current power source 300 is masked not to be observed at the bus line 10, so that the output voltage from the power source server 100 is only observed at the bus line 10. Thus, the impedance for the period CD is the impedance for the power source server 100, which is the power supply source. Naturally, no power is supplied from the power source server 100 for the following period DE, and thus, the voltage Vs from the direct-current power source 300 is observed, as it is, at the bus line 10 for this period DE.

Similarly to the period CD, power is supplied from the power source server 100 for the following period EF. For this period, the voltage Vs from the direct-current power source 300 is masked not to be observed at the bus line 10, so that the output voltage from the power source server 100 is only observed at the bus line 10. Naturally, no power is supplied from the power source server 100 for the following period FG, and thus, the voltage Vs from the direct-current power source 300 is observed, as it is, at the bus line 10 for this period FG. Then, similarly to the period AB, no power is supplied from the power source server 100 for the following period GH. Thus, the voltage Vs from the direct-current power source 300 is observed, as it is, at the bus line 10 for the period GH.

A voltage equal to or higher than the voltage Vs is thus always observed at the bus line 10 by superposing the output voltage from the power source server 100 and the voltage Vs from the direct-current 300 upon the bus line 10. The clients 200 to be used upon connection to the bus line 10 can be supplied with power of at least the voltage Vs immediately after the connection to the bus line 10.

An arrangement for superposing the voltage Vs upon the bus line 10 in the power supply system 1 according to the first embodiment of the present invention has been described above. Next, the arrangement of one of the clients 200 supplied with power in the power supply system 1 according to the first embodiment of the present invention will be described.

### < 1-4. Arrangement of Client >

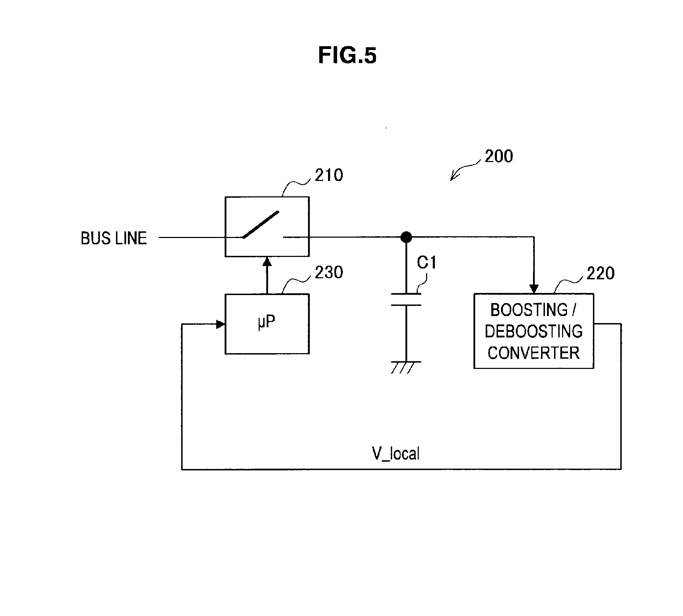

Fig. 5 is an illustration that shows the arrangement of the client 200 according to the first embodiment of the present invention. Now, the arrangement of the client 200 according to the first embodiment of the present invention will be described below with reference to Fig. 5.

As shown in Fig. 5, the client 200 according to the first embodiment of the present invention includes a switch 210, a boosting/deboosting converter 220, a microprocessor 230, and a capacitor C1. Besides, the arrangement shown in Fig. 5 is arranged to receive power of the voltage Vs from the direct-current power source 300. In addition to the arrangement shown in Fig. 5, the client 200 includes an arrangement for receiving power supplied from the power source server 100. For example, the arrangement disclosed in JP 2008-123051 (A) may be used for the client 200 to receive power supplied from the power source server 100.

The switch 210 is closed when no power is supplied from the power source server 100 to the client 200. Switching of the switch 210 is controlled by the microprocessor 230. When the switch 210 is closed, the client 200 can receive power of the voltage Vs from the direct-current power source 300. With the switch 210 closed, the power of the voltage Vs from the direct-current power source 300 is used for charge the capacitor C1.

The boosting/deboosting converter 220 converts an input voltage into a voltage higher or lower than the input voltage and outputs the converted voltage. As charges are stored in the capacitor C1 by the power of the voltage Vs from the direct-current power source 300, the voltage of the capacitor C1 will be increased eventually. The boosting/deboosting converter 220 triggers its activation in association with such increase in the voltage of the capacitor C1. The boosting/deboosting converter 220 converts the input voltage into a voltage V_local (e.g. 3.3 V) for activating the microprocessor 230 and outputs the converted voltage.

The microprocessor 230 controls the activation of the client 200; for example, it may control switching of the switch 210 or detect synchronisation timing between the client 200 and the power source server 100.

The microprocessor 230 is activated by the voltage V_local output by the boosting/deboosting converter 220. In other words, the microprocessor 230 triggers its activation in association with the activation of the boosting/deboosting converter 220, which is associated with the increase in the voltage of the capacitor C1 being charged.

When the microprocessor 230 triggers its activation, synchronisation timing between the client 200 and the power source server 100 can be then detected. The synchronisation timing corresponds to the periods BC, DE, and FG in Fig. 4. The microprocessor 230 controls the switch 210 to close for each of the periods BC, DE, and FG in Fig. 4 and to open for the other periods. With switching of the switch 210 under control by the microprocessor 230, the client 200 can be supplied with the power of the voltage Vs from the direct-current power source 300 for the synchronisation timing between the client 200 and the power source server 100. The client can be under control not to be supplied with the power of the voltage Vs from the direct-current power source 300 for the other periods.

The arrangement of the client 200 according to the first embodiment of the present invention has been described above. According to the first embodiment of the present invention as described above, power of the positive voltage Vs can be superposed upon the bus line 10 as the power source for the primary activation of the clients 200. This positive voltage is observed at the bus line 10 for the periods in which no power is supplied from the power source server. Consequently, the clients 200 can receive the power of the positive voltage Vs on the bus line 10 to use it as the power source for the primary activation.

### < 2. SECOND EMBODIMENT >

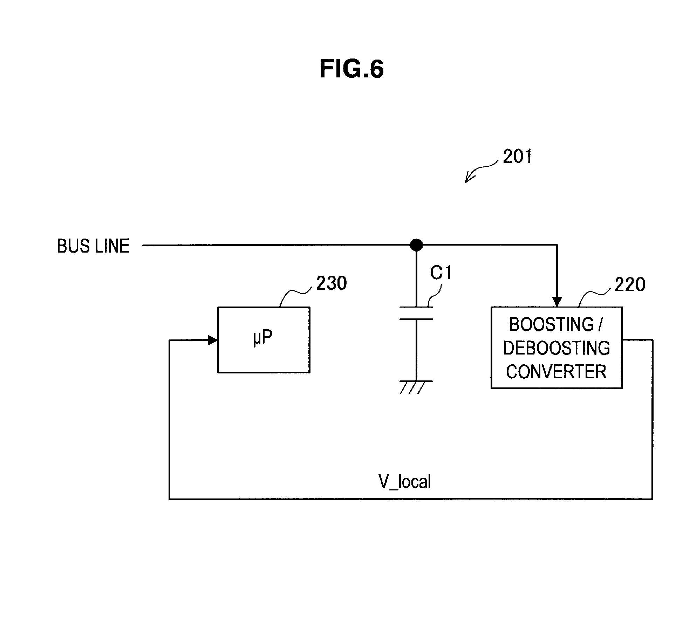

Next, the arrangement of a client 201 according to the second embodiment of the present invention will be described. Fig. 6 is an illustration that shows the arrangement of the client 201 according to the second embodiment of the present invention.

As shown in Fig. 6, the client 201 according to the second embodiment of the present invention includes a boosting/deboosting converter 220, a microprocessor 230, and a capacitor C1. The client 201 shown in Fig. 6 differs from the client 200 shown in Fig. 5 in the absence in Fig. 6 of the switch 210 of Fig. 5. Accordingly, the client 201 shown in Fig. 6 can store part of the (or the entire) input voltage in the capacitor C1. The operations after the capacitor C1 is charged are the same as in the client 200 shown in Fig. 5 whilst the microprocessor 230 shown in Fig. 6 will not control switching due to the absence of the switch 210 in the client 201.

So arranged, the client 201 can use not only the power of the voltage Vs from the direct-current power source 300 supplied for each of the periods BC, DE, and FG shown in Fig. 4, but also part of the power for clients supplied from the power source server 100 for the periods CD, EF, and so on.

The arrangement of the client 201 according to the second embodiment of the present invention has been described above. According to the second embodiment of the present invention as described above, power of the positive voltage Vs can be superposed upon the bus line 10 as the power source for the primary activation of the client 201. This positive voltage is observed at the bus line 10 for the periods in which no power is supplied from the power source server. Consequently, the client 201 can receive the power of the positive voltage Vs on the bus line 10 to use it as the power source for the primary activation. Furthermore, the client 201 can use not only the power of the voltage Vs from the direct-current power source 300, but also part of the power for clients supplied from the power source server 100 as the power source for the primary activation.

### < 3. THIRD EMBODIMENT >

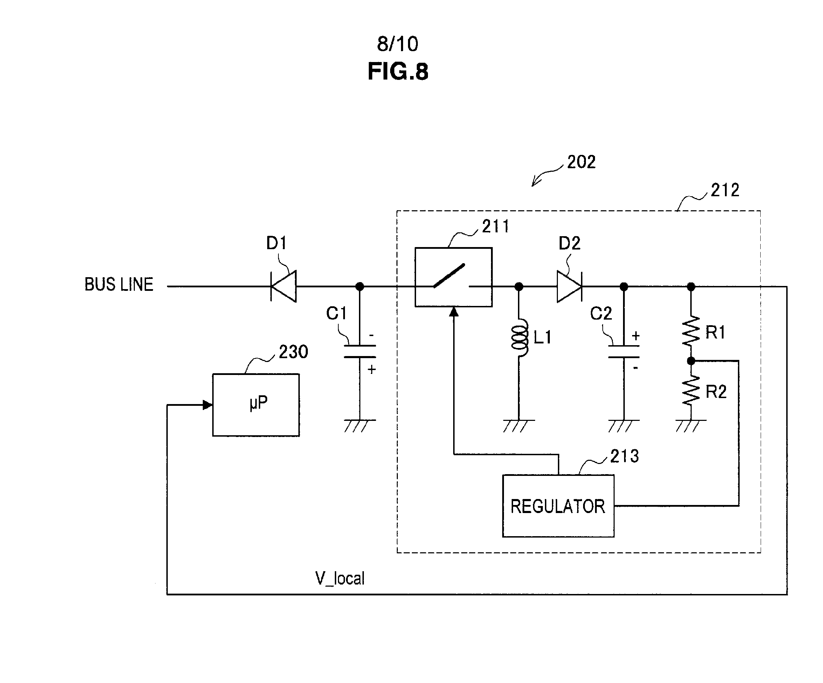

Next, the arrangement of a client 202 according to the third embodiment of the present invention will be described. Fig. 8 is an illustration that shows the arrangement of the client 202 according to the third embodiment of the present invention.

As shown in Fig. 8, the client 202 according to the third embodiment of the present invention includes a converter 212, a microprocessor 230, a diode D1, and a capacitor C1. The converter 212 includes a switch 211, a regulator 213, a capacitor C2, an inductor L1, and resistances R1 and R2.

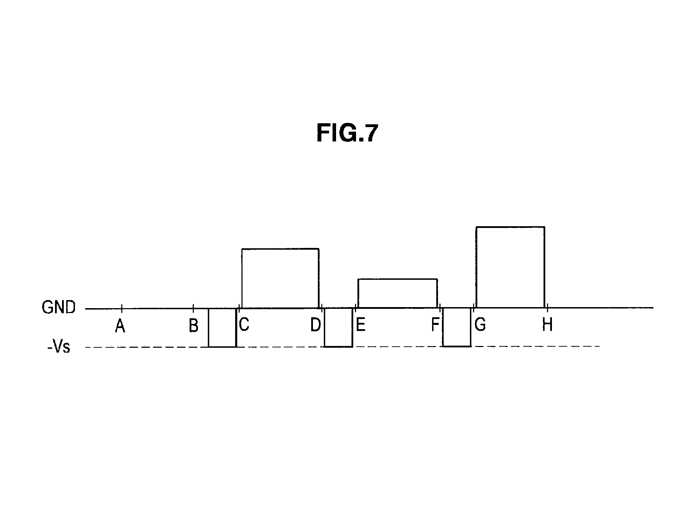

In the first and second embodiments of the present invention described above, the power of the positive voltage Vs is supplied from the direct-current power source 300. In the third embodiment of the present invention, power of a negative voltage -Vs is supplied from the direct-current power source 300. Fig. 7 is an illustration that shows an example where the voltage from the power source server 100 and the voltage from the direct-current power source 300 are superposed upon the bus line 10 in the third embodiment of the present invention.

As shown in Fig. 7, no power is supplied from the power source server 100 nor the direct-current power source 300 for the period AB in the third embodiment of the present invention. Thus, the ground voltage is observed at the bus line 10 for the period AB. Power is supplied from the direct-current power source 300 and naturally no power is supplied from the power source server 100 for the following period BC, and thus, the negative voltage -Vs from the direct-current power source 300 is observed at the bus line 10 for this period BC.

In the example shown in Fig. 7, power is supplied from the power source server 100. For this period, no power is supplied from the direct-current power source 300, and then the output voltage from the power source server 100 will be only observed at the bus line 10. Similarly to the period BC, power is supplied from the direct-current power source 300 and naturally no power is supplied from the power source server 100 for the following period DE, and thus, the negative voltage -Vs from the direct-current power source 300 is observed at the bus line 10 for this period DE.

Subsequently, the output voltage from the power source server 100 is only observed at the bus line 10 for the period EF, and the negative voltage -Vs from the direct-current power source 300 is observed at the bus line 10. The output voltage from the power source server 100 is then only observed at the bus line 10 for the period GH. Fig. 8 shows the client 202 according to the third embodiment of the present invention arranged to convert this negative voltage -Vs from the direct-current power source 300 into the positive voltage V_local by the converter 212 for use in the primary activation of the microprocessor 230. Besides, although the converter 212 for converting the negative voltage -Vs into the positive voltage V_local is shown in the client 202 of Fig. 8, it should be appreciated, of course, that a technique for converting the negative voltage -Vs into the positive voltage V_local is not limited to the above example in the embodiments of the present invention.

When the power of the negative voltage -Vs from the direct-current power source 300 is output to the bus line 10, it is then received by the client 202. The client 202 charges the capacitor C1 via diode D1 by use of part of the (or the entire) received power. As the capacitor is charged by use of the power of the negative voltage -Vs from the direct-current power source 300, the converter 212 converts the negative voltage -Vs into the positive voltage V_local. This converted positive voltage V_local will be then used for the primary activation of the microprocessor 230. Thus, the microprocessor 230 of the client 202 can be activated by use of the power of the negative voltage -Vs output from the direct-current power source 300. Furthermore, the power from the power source server 100 can be consumed effectively because the power output for clients from the power source server 100 will not be used any more for the primary activation of the microprocessor 230 of the client 202.

In this embodiment, the changes shown in Fig. 7 will occur in the voltage at the bus line 10. Accordingly, without monitoring radio frequency signals travelling through the bus line 10, the synchronisation period parts for the power source server 100 and the client 202, i.e. the periods BC, DE, and FG in Fig. 7, can be extracted by detecting the changes in the voltage.

The arrangement of the client 202 according to the third embodiment of the present invention has been described above. According to the third embodiment of the present invention as described above, power of the negative voltage -Vs can be superposed upon the bus line 10 as the power source for the primary activation of the client 202. The client 202 can receive the power of the negative voltage -Vs on the bus line 10 and convert it from the negative voltage into the positive voltage to use it as the power source for the primary activation. Furthermore, the client 201 can use not only the power of the voltage Vs from the direct-current power source 300, but also part of the power for clients supplied from the power source server 100 as the power source for the primary activation.

### < 4. FOURTH EMBODIMENT >

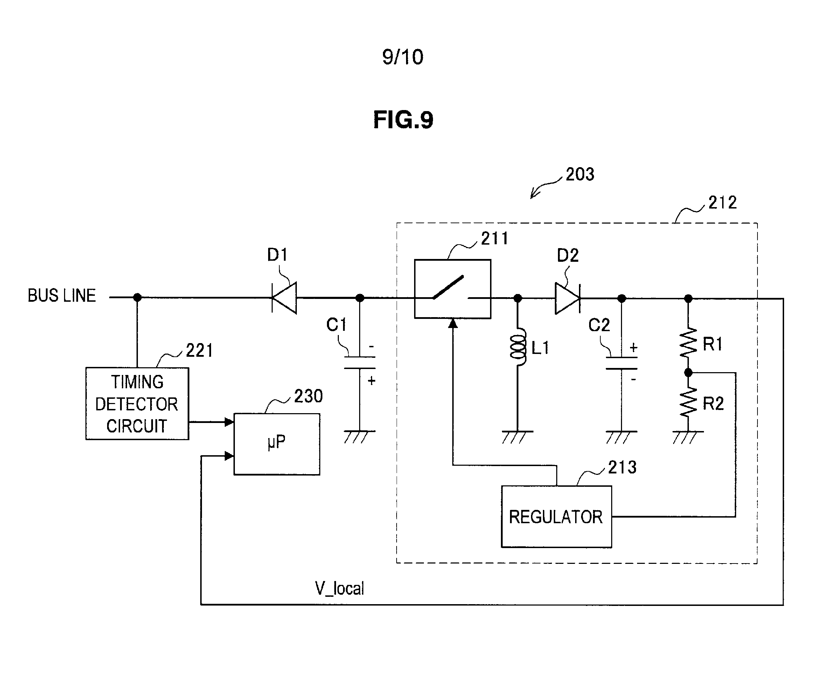

Next, the arrangement of a client 203 according to the fourth embodiment of the present invention will be described. Fig. 9 is an illustration that shows the arrangement of the client 203 according to the third embodiment of the present invention.

As described above in terms of synchronisation periods for a power source server and a client, without monitoring, by the client, radio frequency signals travelling through the bus line 10, the synchronisation periods can be extracted by outputting the negative voltage -Vs from the direct-current power source 300.

As described in JP 2008-123051 (A), timing information of the entire power supply system is travelling over the bus line for the synchronisation periods. Accordingly, a power source server and a client connected to the power supply system can use, as the timing information, the negative voltage -Vs output from the direct-current power source 300.

According to a server-client-typed power supply system as described in JP 2008-123051 (A), in a primary state where only one power source server exists on the system (bus line), the power source server outputs a synchronisation packet to be send out for a synchronisation period with a parameter added thereto to be an appropriate flag. In this state, the power source server will not output any negative power source. Beginning with this state, a further power source server or a client may be then connected onto the system (bus line), a synchronisation server will be selected within the power supply system, and any one of the power source server will become a synchronisation server. The negative voltage -Vs will be output from the time point of establishment of this state in which the synchronisation server is selected. Accordingly, the negative voltage -Vs may be output from the selected synchronisation server.

As in this embodiment, capability of very accurate capture of the synchronisation timing is an advantage of the mode for using, as timing information, by a power source server and a client connected to the power supply system the negative voltage -Vs output from the direct-current power source 300. As described in JP 2008-123051 (A), for example, the synchronisation between a power source server and a client has been typically made by a software-wise synchronisation, which will be made upon the basis of synchronisation packet detection. According to the technique based upon the software-wise synchronisation, very accurate timing may not be easily created because the processing time to output a synchronisation packet will be affected by the state inside the software. Also on the side of receiving the synchronisation packet created by the synchronisation server, even if the synchronisation packet travelling through the bus line is detected, the software processes might result in wide variety until it is determined as synchronisation timing eventually.

On the contrary to the above technique, very high accuracy of timing detection is an advantage of the mode for using the negative voltage -Vs output as timing information by a power source server and a client connected to the power supply system, which accordingly results in an advantageous effect of easy realisation of synchronisation timing period minimisation in respect to the timing for outputting a power packet. Besides, practically speaking, it is preferable to set an appropriate period as synchronisation timing because reduced synchronisation timing periods lead up to decreased power.

On the basis of the above described points, the arrangement of the client 203 according to the fourth embodiment of the present invention will be described. As shown in Fig. 9, the client 203 according to the fourth embodiment of the present invention includes a switch 211, a converter 212, a timing detector circuit 221, a microprocessor 230, a diode D1, and a capacitor C1. The converter 212 includes a regulator 213, a capacitor C2, an inductor L1, and resistances R1 and R2.

The client 203 according to the fourth embodiment of the present invention shown in Fig. 9 differs from the client 202 according to the third embodiment of the present invention shown in Fig. 7 in the presence of the timing detector circuit 221. The timing detector circuit is directly connected to the bus line 10. It is a circuit for detecting occurrence of the negative voltage -Vs output by the direct-current power source 300 and observed at the bus line 10. By the timing detector circuit 221 detecting occurrence of the negative voltage -Vs, the synchronisation timing between the power source server 100 and the client 203 can be detected.

Besides, the client 203 may include a level convertor circuit for convert the negative voltage -Vs detected by the timing detector circuit 221 into a voltage available for the microprocessor 230 to supply the converted voltage to the microprocessor 230. The microprocessor 230 can then run interrupt processing at this timing for supplying the voltage from the level convertor circuit to execute synchronisation processing in the power supply system 1.

The arrangement of the client 203 according to the fourth embodiment of the present invention has been described above. According to the fourth embodiment of the present invention as described above, power of the negative voltage -Vs can be superposed upon the bus line 10 as the power source for the primary activation of the client 203. The client 203 can receive the power of the negative voltage on the bus line 10 and convert it from a negative voltage into a positive voltage to use it as a power source for the primary activation. Furthermore, the client 203 can detect an occurrence period of the negative voltage to use this period for synchronisation processing with the power source server.

### < 5. POWER SUPPLY PROCESS BY POWER SUPPLY SYSTEM>

Besides, the way of supplying power in the power supply system 1 shown in Fig. 1 will not be described here in detail since it is described in the above-referred JP 2008-123051 (A), whereas the power supply process with the power supply system 1 according to the first embodiment of the present invention will be described below in brief.

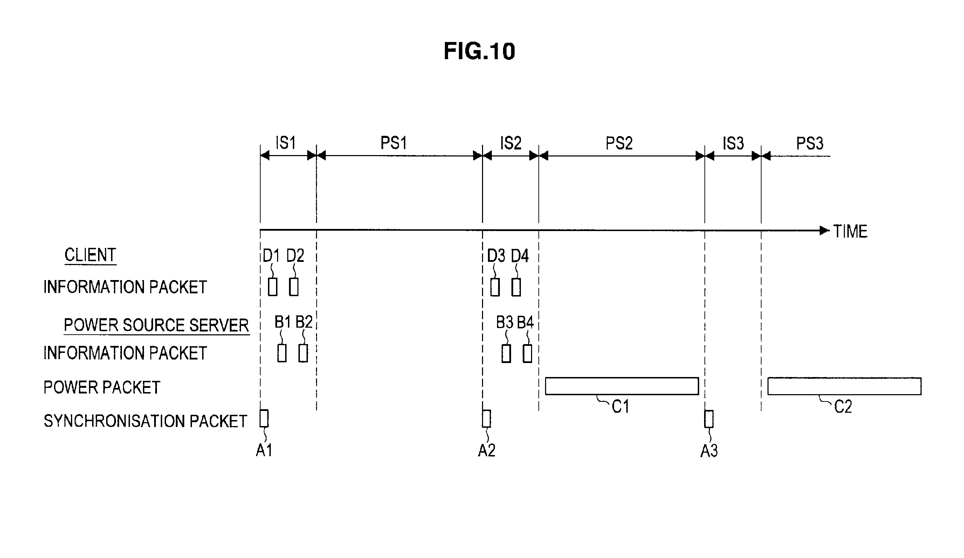

Fig. 10 is an illustration that illustrates the power supply process with the power supply system 1 according to each of the embodiments of the present invention. Now, the power supply process with the power supply system 1 according to each of the embodiments of the present invention will be described below with reference to Fig. 10.

As shown in Fig. 10, the power source server 100 outputs synchronisation packets A1, A2, A3 ... to the bus line 10. Moreover, in order to supply power to the clients 200, the power source server 100 outputs information packets B1, B2, B3 ..., which is information signals transmitted/received to/from the clients 200, and power source packets C1, C2, C3 ..., into which power energy is packetized. On the other hand, in order to be supplied with power by the power source server 100, the clients 200 output information packets D1, D2, D3, ... , which are information signals transmitted/received to/from the power source server 100.

The power source server 100 outputs the synchronisation packets A1, A2, A3 ... at the beginning of a time slot at predetermined intervals (e.g., at intervals of one second). The time slots include information slots, in which information packets are transmitted, and power slots, in which power packets are transmitted. The information slots IS1, IS2, IS3 ... are intervals within information packets are exchanged between the power source server 100 and the clients 200. The power source slots PS1, PS2, PS3 ... are intervals within power packets C1, C2, C3 ... are output to be supplied from the power source server 100 to the clients 200. The information packets are packets that can be output only within the intervals of the information slots IS1, IS2, IS3 .... Accordingly, an information packet may be transmitted over multiple information slots if the information packet has not completely transmitted/received within one information slot. On the other hand, the power packets are packets that can be output within the intervals of the power source slots PS1, PS2, PS3 ....

A power source server 100 may have one or more server power source profiles that indicate specifications of power which can be supplied by the power source server 100, and the clients 200 may be supplied with power by a power source server 100 that can supply power adapted to their own specifications. In this case, the clients 200 will acquire the server power source profiles from the power source server 100 to determine the specifications of the power source server 100(server power source profiles) for them. For this, first of all, the clients 200 detect a synchronisation packet A1 output by the power source server 100, and acquire the address of the power source server 100 contained in the synchronisation packet A1. The address may be an MAC address, for example. Next, the clients 200 transmit to the power source server 100 an information packet D1 for requesting to transmit the number of the server power source profiles that the power source server 100.

The power source server 100 receives the information packet D1, and it then transmits, in an information packet B1, the server power source profile number, which is the number of the server power source profiles that the power source server 100. The clients 200 receive the information packet B1, and they acquires the contents of the server power source profiles from the power source server 100 for the number of the server power source profiles of the power source server 100. Given that the power source server 100 has two server power source profiles, for example, the clients 200 then acquire one server power source profile at first. The clients 200 acquire the server power source profile, and they transmit an information packet D2 for requesting uses of power sources.

The power source server 100 receives the information packet D2, and it transmits to the clients 200, as an information packet B2, the first server power source profile stored in a storage (not shown) provided inside the power source server 100. The clients 200 receive the information packet B2, and they transmit an information packet for acquiring the second server power source profile. However, the information slot IS1 has expired at this time, and the power source slot PS1 for transmission of the power source packets has started. Thus, the information packet will be transmitted within the next information slot IS2. Besides, power will not be supplied within the power source slot PS1 since the specification of power to be supplied from the power source server 100 to the clients 200 has not been determined yet.

The power source slot PS1 expires, the power source server 100 then outputs a synchronisation packet A2 indicating the start of the next time slot. Then, the clients 200 receive the information packet B2 from the power source server 100, and they transmit, as an information packet D3, information for acquiring the second server power source profile.

The power source server 100 receives the information packet D3, and it transmits to the clients 200, as an information packet B3, the second server power source profile stored in a storage (not shown) provided inside the power source server 100. The clients 200 receive the information packet B3, acquire the two server power source profiles that the power source server 100 has, and then select one server power source profile of the power source specification adapted to each of them. The clients 200 then transmit an information packet D4 for determining the selected server power source profile for the power source server 100.

The power source server 100 receives the information packet D4, and they transmit to the clients 200, as an information packet B4, information representing a response for the determination of the power source specification, in order to inform the clients 200 that the first server power source profile has been determined. Then, the power source server 100 outputs a power source packet C1 to the clients 200 for power supply when the power source slot PS2 has started after the expiration of the information slot IS2. Besides, as for the timing for power source packet transmission, the clients 200 may appoint power supply start time for the power source server 100 by use of information representing a transmission start time setting request.

The power supply process with power supply system 1 according to each of the above-described embodiments of the present invention has been described above. In the third and fourth embodiments of the present invention described above, the direct-current power source 300 may output the power of the negative voltage -Vs for the periods in which no power packet is sent out from the power source server, i.e. for the periods of information slots. Then, the client 203 according to the fourth embodiment of the present invention can detect an occurrence period of the negative voltage to use this period for synchronisation processing with the power source server.

### < 6. CONCLUSION >

As described above, according to each of the embodiments of the present invention, the direct-current power source 300 is provided in the power supply system 1 for outputting direct-current power of a predetermined positive voltage Vs or a predetermined negative voltage -Vs, which is independent of the power output from the power source server. If the direct-current power of the positive voltage Vs is output, the direct-current power source 300 always supplies the direct-current power. If the direct-current power of the negative voltage -Vs is output, the direct-current power source 300 supplies the direct-current power only for the periods (synchronisation periods) in which no power is supplied from the power source server 100. The client according to each of the embodiments of the present invention receives the direct-current power of the positive voltage Vs or the negative voltage -Vs supplied from the direct-current power source 300, and uses the received power for the activation of the microprocessor.

By so supplying the direct-current power and receiving the direct-current power, a power source server and a client dynamically connected to a server-client-typed power supply system can spare auxiliary power for trigger the primary activation. With auxiliary power spared, advantages arise such as a simplified power supply system, improvement and enhancement in maintenance, reduced cost, etc.

Furthermore, by outputting the pulsed direct-current of the negative voltage
- Vs to the bus line 10 and receiving the pulsed direct-current of the negative voltage
- Vs on the side of receiving power, this direct-current power can be used for the synchronisation timing determination. The hardware-wise determination gives more accuracy to the synchronisation timing detection rather than the software-wise determination, and can result in enhanced control accuracy of power source output timing from the power source server 100. In other words, enhanced control accuracy of power source output timing from the power source server 100 enables to minimise synchronisation timing periods in respect to power output timing, and thus can lead up to a shortened idling time for receiving power from the power source server 100.

It should be understood by those skilled in the art that various modifications, combinations, sub-combinations and alterations may occur depending on design requirements and other factors insofar as they are within the scope of the appended claims or the equivalents thereof.

For example, in the above embodiments, the direct-current power of the predetermined positive voltage Vs or the predetermined negative voltage -Vs is output from the direct-current power source 300 separated from the power source server 100, although the embodiments of the present invention is not limited thereto. For example, a synchronisation server for controlling the synchronisation between a power source server and a client may include a direct-current power source for outputting the direct-current power of the predetermined positive voltage Vs or the predetermined negative voltage -Vs.

Embodiments of the present invention are applicable to a power supply apparatus, a power receiving apparatus, a power supply system, and a power supply method, particularly to a power supply system for supplying direct-current power and to a power supply apparatus, a power receiving apparatus, and a power supply method for use in the power supply system.

The present application contains subject matter related to that disclosed in Japanese Priority Patent Application JP 2009-114923 filed in the Japan Patent Office on May 28, 2009, the entire content of which is hereby incorporated by reference.

## Claims

1. A power supply apparatus comprising:
a direct-current power source connected to a bus line on which an information signal representing information is superposed upon direct-current power including first direct-current power and second direct-current power, the direct-current power source arranged to always outputting to the bus line the second direct-current power of a positive voltage, the second direct-current power being superposed, on the bus line, upon the first direct-current power output for a predetermined first period,
wherein the voltage of the second direct-current power is lower than a minimum voltage of the first direct-current power.

2. A power receiving apparatus comprising:
a power receiver connected to a bus line on which an information signal representing information is superposed upon direct-current power including first direct-current power and second direct-current power, the power receiver arranged to receive from the bus line the second direct-current power of a positive voltage lower than a minimum voltage of the first direct-current power, the second direct-current power being superposed, on the bus line, upon the first direct-current power output for a predetermined first period.

3. A power supply system comprising:
a power supply apparatus and a power receiving apparatus connected to a bus line on which an information signal representing information is superposed upon direct-current power including first direct-current power and second direct-current power,
wherein the power supply apparatus includes a direct-current power source arranged to always outputting to the bus line the second direct-current power of a positive voltage, the second direct-current power being superposed, on the bus line, upon the first direct-current power output for a predetermined first period,
wherein the voltage of the second direct-current power is lower than a minimum voltage of the first direct-current power, and
wherein the power receiving apparatus includes a power receiver arranged to receive from the bus line the second direct-current power.

4. A power supply method comprising the step of:
being connected to a bus line on which an information signal representing information is superposed upon direct-current power including first direct-current power and second direct-current power, and always outputting to the bus line the second direct-current power of a positive voltage, the second direct current power being superposed, on the bus line, upon the first direct-current power output for a predetermined first period,
wherein the voltage of the second direct-current power is lower than a minimum voltage of the first direct-current power.

5. A power supply apparatus comprising:
a direct-current power source connected to a bus line on which an information signal representing information is superposed upon direct-current power including first direct-current power and second direct-current power, the second direct current power being superposed, on the bus line, upon the first direct-current power output for a predetermined first period, the direct-current power source arranged to outputting to the bus line the second direct-current power of a negative voltage for a second period different from the first period.

6. A power receiving apparatus comprising:
a power receiver connected to a bus line on which an information signal representing information is superposed upon direct-current power including first direct-current power and second direct-current power, the second direct-current power being superposed, on the bus line, upon the first direct-current power output for a predetermined first period, the power receiver arranged to receive from the bus line the second direct-current power of a negative voltage for a second period different from the first period.

7. The power receiving apparatus according to claim 6, further comprising:
a timing detector for detecting the second period by occurrence of the negative voltage of the second direct-current power,
wherein the second period detected by the timing detector is used for synchronisation processing between the power receiving apparatus and another device connected to the bus line.

8. A power supply system comprising:
a power supply apparatus and a power receiving apparatus connected to a bus line on which an information signal representing information is superposed upon direct-current power including first direct-current power and second direct-current power,
wherein the second direct-current power being superposed, on the bus line, upon the first direct-current power output for a predetermined first period,
wherein the power supply apparatus includes a direct-current power source arranged to outputting to the bus line the second direct-current power of a negative voltage for a second period different from the first period, and
wherein the power receiving apparatus includes a power receiver arranged to receive from the bus line the second direct-current power for the second period.

9. A power supply method comprising the step of:
being connected to a bus line on which an information signal representing information is superposed upon direct-current power including first direct-current power and second direct-current power being superposed, on the bus line, upon the first direct-current power output for a predetermined first period, and outputting to the bus line the second direct-current power of a negative voltage for a second period different from the first period.
